# EUROPÄISCHE PATENTSCHRIFT

(11) **EP 1 572 855 B1**
(45) Veröffentlichungstag und Bekanntmachung des Hinweises auf die Patenterteilung: **04.10.2006**
(21) Anmeldenummer: 03813896.2
(22) Anmeldetag: 18.12.2003
(51) Int. Cl.: C11D 3/39, C11D 17/00

(54) **NATRIUMPERCARBONATPARTIKEL MIT VERBESSERTER LAGERSTABILIT T**
SODIUM PERCARBONATE PARTICLES WITH IMPROVED STORAGE STABILITY
PARTICULES DE PERCARBONATE DE SODIUM A DUREE DE CONSERVATION EN STOCKAGE AMELIOREE

(30) Priorität: 20.12.2002 DE 10261161
(43) Veröffentlichungstag der Anmeldung: 14.09.2005
(73) Patentinhaber: Degussa AG, 40474 Düsseldorf (DE)
(72) Erfinder: ZIMMERMANN, Klaus, 63517 Rodenbach (DE); JAKOB, Harald, 63594 Hasselroth (DE); MENZEL, Frank, 63456 Hanau (DE)
(86) Internationale Anmeldenummer: PCT/EP2003/014445
(87) Internationale Veröffentlichungsnummer: WO 2004/058932

(56) Entgegenhaltungen:
- WO-A-95/02724
- WO-A-96/14388
- US-A- 5 478 488
- US-A- 5 902 682

## Beschreibung

Die Erfindung betrifft Natriumpercarbonatpartikel mit verbesserter Lagerstabilität in Gegenwart von Buildern, insbesondere in Gegenwart von silikatischen Buildern.

Natriumpercarbonat wird als Bleichmittel und als bleichwirksamer Bestandteil in Wasch- und Reinigungsmitteln verwendet. Natriumpercarbonat weist dabei den Nachteil auf, dass es in Gegenwart von Buildern, die Feuchtigkeit aufnehmen und wieder abgegeben können, zur Zersetzung neigt, was zu einem Verlust an Aktivsauerstoff und damit an Bleichwirkung führt. Für die Anwendung in builderhaltigen Bleichmitteln, Waschmitteln oder Reinigungsmitteln wird Natriumpercarbonat deshalb vorzugsweise in Form von Partikeln mit einer stabilisierenden Hüllschicht eingesetzt, um eine verbesserte Lagerstabilität zu erzielen.

Aus DE 870 092 ist bekannt, dass sich Natriumpercarbonatpulver durch trockenes Zumischen von pyrogenen Oxiden, vorzugsweise pyrogener Kieselsäure, in Mengen von etwa 1 % stabilisieren lässt. Die auf diesem Weg erreichbare Stabilisierung ist jedoch noch nicht ausreichend, um die Zersetzung von Natriumpercarbonat in Mischungen mit silikatischen Buildern zu vermeiden.

US 4,215,990 beschreibt Builder-freie Bleichmittel, die neben 5 bis 50 Gew.-% Natriumpercarbonat noch 0,1 bis 2 Gew.-% einer feinteiligen Kieselsäure mit einer Partikelgröße im Bereich von 1 bis 150 µm enthalten. Zur Vermeidung von Verbackung enthalten die Bleichmittel zusätzlich 0,05 bis 1 Gew.-% Maisstärke und/oder Diethylphthalat. Das Dokument enthält keinen Hinweis auf die Verwendung von hydrophobierter Kieselsäure oder die Stabilität der beschriebenen Bleichmittel in Gegenwart von Buildern.

WO 92/07057 beschreibt flüssige Waschmittelzusammensetzungen, die eine feste wasserlösliche Persauerstoffverbindung, ein Tensid und eine hydrophobe Kieselsäure enthalten. Diese Waschmittelzusammensetzungen enthalten 0,5 bis 5 Gew.-% der hydrophoben Kieselsäure, sowie die Persauerstoffverbindung in einer Menge, die 0,5 bis 3 Gew.-% Aktivsauerstoff zur Verfügung stellt. Der Zusatz der hydrophoben Kieselsäure bewirkt eine Verdickung der flüssigen Waschmittelzusammensetzung, woraus ersichtlich ist, dass die hydrophobe Kieselsäure in der Flüssigphase der Waschmittelzusammensetzung dispergiert vorliegt.

US 5,374,368 und US 5,496,542 beschreiben Wasserstoffperoxid freisetzende Zubereitungen in flüssiger oder in Gelform, die neben 55 bis 90 Gew.-% Polyalkylenglykol und 5 bis 20 Gew.-% Natriumpercarbonat auch 0,5 bis 3 Gew.-% bzw. 0,5 bis 6 Gew.-% kolloidale Kieselsäure enthalten. Als geeignete kolloidale Kieselsäure ist auch die hydrophobierte Kieselsäure Aerosil® R972 genannt. Auch hier wirkt die Kieselsäure als Verdickungsmittel für das Polyalkylenglykol und ist demnach in der Flüssigphase der Zubereitung dispergiert.

WO 95/02724 beschreibt Waschmittelgranulate, die ein Alkalimetallpercarbonat mit einer mittleren Partikelgröße im Bereich von 250 bis 900 µm und ein hydrophobes Material ausgewählt aus Kieselsäure, Talk, Zeolith, DAY und Hydrotalcit in einem Gewichtsverhältnis im Bereich von 4 : 1 bis 40 : 1 enthalten. Als hydrophobes Material wird bevorzugt eine hydrophobierte Kieselsäure, wie z.B. Aerosil® R972 verwendet. In einer beschriebenen Ausführungsform zur Herstellung der Waschmittelzubereitung wird das hydrophobe Material auf die Percarbonatpartikel aufgestäubt, wobei dieser Schritt in einer rotierenden Trommel, einem Mischer oder einer Wirbelschicht durchgeführt wird. Die beschriebenen Waschmittelgranulate weisen eine verbesserte Stabilität des Percarbonats gegen Zersetzung auch in Gegenwart von Buildern auf.

WO 95/02724 lehrt auf Seite 2 im vierten Absatz, dass das beschriebene Gewichtsverhältnis von Alkalimetallpercarbonat zu hydrophobem Material im Bereich von 4 : 1 bis 40 : 1 ein wesentliches Merkmal ist, um in den beschriebenen Waschmittelzusammensetzungen eine verbesserte Lagerstabilität des Percarbonats zu erreichen. Natriumpercarbonatpartikel, auf die eine hydrophobierte Kieselsäure in diesem Mengenverhältnis aufgestäubt wurde, weisen jedoch im Vergleich zu handelsüblichen Natriumpercarbonatprodukten, die keine hydrophobierte Kieselsäure enthalten, Nachteile in ihrer Handhabung, sowie bei ihrer Verwendung in Bleich-, Wasch- und Reinigungsmitteln auf. Bei der Handhabung der Natriumpercarbonatpartikel kommt es zu einer verstärkten Staubbildung, was die pneumatische Förderung der Partikel und die Weiterverarbeitung in der Herstellung von Bleich-, Wasch- oder Reinigungsmitteln erschwert. Die in WO 95/02724 beschriebenen, mit hydrophobierter Kieselsäure bestäubten Natriumpercarbonatpartikel lassen sich darüber hinaus auch schlechter in Wasser dispergieren und neigen zur Bildung von Verklumpungen und zur Abscheidung der zugesetzten hydrophobierten Kieselsäure auf der Wasseroberfläche. Die Verwendung dieser Natriumpercarbonatpartikel in Bleich-, Wasch- und Reinigungsmitteln führt deshalb zu einer Verschlechterung der Anwendungseigenschaften dieser Mittel.

Aufgabe der Erfindung war deshalb die Bereitstellung von Natriumpercarbonatpartikeln, die in Gegenwart von Buildern eine hohe Lagerstabilität aufweisen und gleichzeitig ohne Staubbildung und ohne Verbackung der Partikel gehandhabt und gelagert werden können. Die Natriumpercarbonatpartikel müssen sich darüber hinaus auch leicht und ohne Rückstände in Wasser dispergieren lassen, so dass ihre Verwendung in Bleich-, Wasch- und Reinigungsmitteln nicht zu einer Verschlechterung der Anwendungseigenschaften dieser Mittel führt.

Es wurde nun überraschend gefunden, dass sich diese Aufgabe durch Natriumpercarbonatpartikel lösen lässt, die auf ihrer Oberfläche nur 0,01 bis 1 Gew.-% und vorzugsweise nur 0,1 bis 0,5 Gew.-% eines hydrophobierten feinteiligen Oxids aufweisen.

Gegenstand der vorliegenden Erfindung sind Natriumpercarbonatpartikel, dadurch gekennzeichnet, dass sie auf ihrer Oberfläche 0,01 bis 1 Gew.-%, vorzugsweise 0,1 bis 0,5 Gew.-% eines hydrophobierten feinteiligen Oxids der Elemente Silicium, Aluminium oder Titan oder eines Mischoxids dieser Elemente enthalten, wobei das hydrophobierte feinteilige Oxid vorzugsweise eine hydrophobierte pyrogene oder gefällte Kieselsäure ist.

Die Erfindung umfasst außerdem ein Verfahren zur Herstellung dieser Natriumpercarbonatpartikel, dadurch gekennzeichnet, dass Natriumpercarbonatpartikel, die gegebenenfalls eine oder mehrere Hüllschichten aufweisen, mit 0,01 bis 1 Gew.-%, vorzugsweise 0,1 bis 0,5 Gew.-% eines hydrophobierten feinteiligen Oxids der Elemente Silicium, Aluminium oder Titan oder eines Mischoxids dieser Elemente gemischt werden, wobei die eingesetzten Natriumpercarbonatpartikel vorzugsweise in trockenem Zustand mit dem hydrophobierten feinteiligen Oxid gemischt werden.

Die Erfindung umfasst schließlich auch die Verwendung der erfindungsgemäßen Natriumpercarbonatpartikel als Bleichkomponente in einem Bleichmittel, Waschmittel oder Reinigungsmittel.

Die erfindungsgemäßen Natriumpercarbonatpartikel enthalten auf ihrer Oberfläche 0,01 bis 1 Gew.-%, vorzugsweise 0,1 bis 0,5 Gew.-% eines hydrophobierten feinteiligen Oxids der Elemente Silicium, Aluminium oder Titan oder ein Mischoxid dieser Elemente. Vorzugsweise enthalten sie als hydrophobiertes feinteiliges Oxid eine hydrophobierte pyrogene oder gefällte Kieselsäure.

Geeignete feinteilige Oxide sind zum Beispiel pyrogene Oxide, die durch Flammhydrolyse von flüchtigen Verbindungen der Elemente Silicium, Aluminium oder Titan oder von Mischungen dieser Verbindungen erhalten werden. Die auf diesem Weg erhältlichen pyrogenen Oxide oder Mischoxide weisen vorzugsweise eine mittlere Primärpartikelgröße von weniger als 50 nm auf und können zu größeren Partikeln aggregiert sein, deren mittlere Partikelgröße vorzugsweise weniger als 20 µm beträgt.

Ebenso geeignet sind gefällte Oxide, die aus wässrigen Lösungen von Verbindungen der Elemente Silicium, Aluminium oder Titan oder Mischungen dieser Verbindungen ausgefällt wurden. Die gefällten Oxide, bzw. Mischoxide können neben Silicium, Aluminium und Titan noch geringe Mengen an Alkalimetall- oder Erdalkalimetallionen enthalten. Die mittlere Partikelgröße der gefällten Oxide beträgt vorzugsweise weniger als 50 µm und besonders bevorzugt weniger als 20 µm.

Hydrophobierte Oxide im Sinne der Erfindung sind Oxide die an ihrer Oberfläche über chemische Verbindungen gebundene organische Reste aufweisen und von Wasser nicht benetzt werden. Hydrophobierte Oxide können zum Beispiel durch Umsetzen von pyrogenen oder gefällten Oxiden mit Organosilanen, Silazanen oder Polysiloxanen hergestellt werden. Geeignete Siliciumverbindungen zur Herstellung von hydrophobierten Oxiden sind aus EP-A 0 722 992, Seite 3, Zeile 9 bis Seite 6, Zeile 6 bekannt. Besonders bevorzugt sind hydrophobierte Oxide, die durch Umsetzung eines feinteiligen Oxids mit einer Siliciumverbindung der in EP-A 0 722 992 angeführten Verbindungsklassen (a) bis (e) und (k) bis (m) hergestellt wurden. Die hydrophobierten feinteiligen Oxide weisen vorzugsweise eine Methanolbenetzbarkeit von mindestens 40 auf.

Die erfindungsgemäßen Natriumpercarbonatpartikel weisen vorzugsweise eine mittlere Partikelgröße im Bereich von 0,2 bis 5 mm und besonders bevorzugt im Bereich von 0,5 bis 2 mm auf. Bevorzugt werden Natriumpercarbonatpartikel mit einem geringen Feinkornanteil, vorzugsweise mit einem Anteil von weniger als 10 Gew.-% Partikel kleiner als 0,2 mm und besonders bevorzugt weniger als 10 Gew.-% Partikel mit einer Partikelgröße von weniger als 0,3 mm.

Die erfindungsgemäßen Natriumpercarbonatpartikel weisen vorzugsweise eine im Wesentlichen kugelförmige Gestalt auf mit einer glatten Oberfläche. Partikel mit einer glatten Oberfläche weisen eine Oberflächenrauigkeit von weniger als 10 % des Partikeldurchmessers und bevorzugt von weniger als 5 % des Partikeldurchmessers auf.

Die erfindungsgemäßen Natriumpercarbonatpartikel können ausgehend von Natriumpercarbonatpartikeln hergestellt werden, die nach einem der bekannten Herstellverfahren für Natriumpercarbonat erzeugt wurden. Ein geeignetes Herstellungsverfahren für Natriumpercarbonat ist die Kristallisation von Natriumpercarbonat aus wässrigen Lösungen von Wasserstoffperoxid und Natriumcarbonat, wobei die Kristallisation sowohl in Gegenwart, als auch in Abwesenheit eines Aussalzungsmittels durchgeführt werden kann, wozu beispielhaft auf die EP-A 0 703 190 verwiesen wird. Ebenfalls geeignet ist die Wirbelschichtsprühgranulation durch Aufsprühen von wässriger Wasserstoffperoxidlösung und wässriger Sodalösung auf Natriumpercarbonatkeime in einer Wirbelschicht bei gleichzeitiger Verdampfung von Wasser, beispielhaft wird auf WO 95/06615 verwiesen. Weiterhin ist auch die Umsetzung von festen Natriumcarbonat mit einer wässrigen Wasserstoffperoxidlösung und nachfolgende Trocknung ein geeignetes Herstellverfahren. Die nach einem dieser Verfahren hergestellten Natriumpercarbonatpartikel bestehen im Wesentlichen aus Natriumcarbonatperhydrat der Zusammensetzung 2Na₂CO₃ · 3H₂O₂. Sie können darüber hinaus noch geringe Mengen an bekannten Stabilisatoren für Persauerstoffverbindungen, wie z.B. Magnesiumsalze, Silikate, Phosphate und/oder Chelatkomplexbildner enthalten. Nach dem Kristallisationsverfahren in Gegenwart eines Aussalzungsmittels hergestellte Percarbonatpartikel können darüber hinaus auch geringe Mengen des verwendeten Aussalzungsmittels, wie z.B. Natriumchlorid enthalten. Vorzugsweise werden die erfindungsgemäßen Natriumpercarbonatpartikel ausgehend von Natriumpercarbonatpartikeln hergestellt, die durch Wirbelschichtsprühgranulation erhalten wurden.

In einer bevorzugten Ausführungsform der Erfindung weisen die Natriumpercarbonatpartikel auf einem Kern aus Natriumpercarbonat zusätzlich eine Hüllschicht auf, die als Hauptbestandteil ein oder mehrere anorganische hydratbildende Salze enthält. Das bzw. die anorganischen hydratbildenden Salze werden vorzugsweise ausgewählt aus der Reihe Natriumsulfat, Natriumcarbonat, Natriumhydrogencarbonat oder Magnesiumsulfat, sowie aus Mischungen dieser Verbindungen und/oder Mischsalzen dieser Verbindungen. Besonders bevorzugt wird als anorganisches hydratbildendes Salz Natriumsulfat. In einer bevorzugten Ausführungsform besteht die Hüllschicht im wesentlichen aus Natriumsulfat. Der Anteil dieser Hüllschicht am Natriumpercarbonatpartikel liegt vorzugsweise im Bereich von 1 bis 20 Gew.-% und besonders bevorzugt im Bereich von 2 bis 10 Gew.-%, berechnet für die nicht-hydratisierte Form des bzw. der hydratbildenden Salze.

Das Umhüllen der Natriumpercarbonatpartikel erfolgt in an sich bekannter Weise. Im Prinzip werden die zu umhüllenden Partikel mit einer eine oder mehrere Hüllkomponenten enthaltenden Lösung möglichst gleichmäßig ein oder mehrfach kontaktiert und gleichzeitig oder anschließend getrocknet. Beispielsweise kann das Kontaktieren auf einem Granulierteller oder in einem Mischer, wie Taumelmischer, erfolgen. Vorzugsweise erfolgt das Beschichten durch Wirbelschichtcoating, wobei eine wässrige Lösung des bzw. der anorganischen hydratbildenden Salze auf die in einer Wirbelschicht befindlichen Natriumpercarbonatpartikel, bzw. mit einer oder mehreren Schichten umhüllten Natriumpercarbonatpartikel aufgesprüht und gleichzeitig mit dem Wirbelschichtgas getrocknet wird. Wirbelschichtgas kann ein beliebiges Gas sein, insbesondere Luft, mit einem Verbrennungsgas direkt erhitzte Luft mit einem CO₂-Gehalt im Bereich von zum Beispiel 0,1 bis etwa 15 %, reines CO₂, Stickstoff und Inertgase. Besonders bevorzugt wird die Hüllschicht mit dem in EP-A 0 970 917 beschriebenen Verfahren aufgebracht.

Die Hüllschicht aus anorganischen hydratbildenden Salzen wird vorzugsweise so aufgebracht, dass sie den Kern aus Natriumpercarbonat vollständig umschließt. Beim Aufbringen der Hüllschicht in Form einer wässrigen Lösung kann sich durch Anlösen der Natriumpercarbonatpartikel beim Beschichten an der Grenze zwischen Kernmaterial und Hüllschichtmaterial ein Grenzbereich ausbilden, der neben Natriumpercarbonat und dem Hüllschichtmaterial weitere Verbindungen enthalten kann. So kann dieser Grenzbereich beim Aufbringen einer Hüllschicht aus im wesentlichen Natriumsulfat neben Natriumpercarbonat und Natriumsulfat noch Natriumhydrogencarbonat sowie Doppelsalze von Natriumhydrogencarbonat und Natriumsulfat wie Sesquicarbonat oder Wegscheiders Salz enthalten.

Die Hüllschicht aus anorganischen hydratbildenden Salzen kann direkt auf dem Kern aus Natriumpercarbonat aufgebracht sein oder von einer oder mehreren weiteren Hüllschichten unterlagert sein. Zusätzlich kann sie von einer oder mehreren weiteren Hüllschichten überlagert sein.

In einer weiteren bevorzugten Ausführungsform weisen die Natriumpercarbonatpartikel über einer anorganische hydratbildende Salze enthaltenden Hüllschicht eine zweite Hüllschicht auf, die als Hauptkomponente ein Alkalimetallsilikat mit einem Modul SiO₂ zu M₂O (M = Alkalimetall) von größer 2,5 enthält. Besonders bevorzugt besteht die zweite Hüllschicht im wesentlichen aus Alkalimetallsilikat. Unter Alkalimetallsilikat sind dabei alle Alkalimetallsilikate zu verstehen, welche im Mittel den genannten Modul ergeben. Bei dem Modul handelt es sich um das Molverhältnis von SiO₂ zu M₂O, wobei M für ein Alkalimetall steht und vorzugsweise Lithium, Natrium oder Kalium oder ein Gemisch dieser Alkalimetalle ist. Besonders bevorzugt ist Natriumsilikat. Der Modul des Alkalimetallsilikats liegt vorzugsweise im Bereich von 3 bis 5 und besonders bevorzugt im Bereich von 3,2 bis 4,2. Der Anteil der zweiten Hüllschicht an den Natriumpercarbonatpartikeln liegt vorzugsweise im Bereich von 0,2 bis 3 Gew.-%.

Die zweite Hüllschicht wird vorzugsweise durch Aufsprühen einer Alkalimetallsilikat enthaltenden wässrigen Lösung aufgebracht, wobei bevorzugt eine wässrige Lösung mit einer Konzentration an Alkalimetallsilikat im Bereich von 2 bis 20 Gew.-%, besonders bevorzugt 3 bis 15 Gew.-% und insbesondere 5 bis 10 Gew.-% verwendet wird. Zum Aufbringen einer Hüllschicht aus im wesentlichen Natriumsilikat wird vorzugsweise eine sogenannte Wasserglaslösung aufgesprüht.

Die erfindungsgemäßen Natriumpercarbonatpartikel zeigen gegenüber vergleichbaren Natriumpercarbonatpartikeln, die an der Oberfläche kein hydrophobiertes feinteiliges Oxid enthalten, eine verbesserte Lagerstabilität in Gegenwart von Buildern, insbesondere in Gegenwart von silikatischen Buildern, wie z.B. Zeolithen. Bei der Stabilisierung von Natriumpercarbonatpartikeln durch eine Hüllschicht aus einem anorganischen hydratbildenden Salz kann bei den erfindungsgemäßen Natriumpercarbonatpartikeln die gleiche Lagerstabilität mit einer wesentlich geringeren Menge an Hüllschicht erreicht werden, als bei vergleichbaren Partikeln, die kein hydrophobiertes feinteiliges Oxid an der Oberfläche enthalten. So können beispielsweise bei der Verwendung einer Hüllschicht aus Natriumsulfat bei den erfindungsgemäßen Natriumpercarbonatpartikeln bereits mit einer Menge an 2 Gew.-% Hüllschicht die gleichen Stabilitäten erreicht werden, wie sie bei Natriumpercarbonatpartikeln ohne hydrophobiertes feinteiliges Oxid an der Oberfläche erst mit einer Hüllschichtmenge von 6 Gew.-% erzielt werden. Die erfindungsgemäßen Natriumpercarbonatpartikel mit einer Hüllschicht aus einem anorganischen hydratbildenden Salz können deshalb bei gleicher Lagerstabilität mit einem höheren Aktivsauerstoffgehalt hergestellt werden.

Die erfindungsgemäßen Natriumpercarbonatpartikel weisen darüber hinaus im Vergleich zu Partikeln, die kein hydrophobiertes feinteiliges Oxid an der Oberfläche enthalten, eine verringerte Verbackungsneigung auf, insbesondere bei der Lagerung unter Druckbelastung. Die erfindungsgemäßen Natriumpercarbonatpartikel sind deshalb gut silierbar, d.h. sie können in Silos über längere Zeit gelagert werden und zeigen auch nach längerer Lagerung im Silo ein gutes Fließverhalten ohne Bildung von Verklumpungen oder Anbackungen im Silo. Der Vorteil der verringerten Verbackungsneigung ist besonders ausgeprägt bei erfindungsgemäßen Natriumpercarbonatpartikeln, die über einer ein anorganisches hydratbildendes Salz enthaltenden Hüllschicht eine zweite Hüllschicht aufweisen, die als Hauptkomponente ein Alkalimetallsilikat enthält.

Die erfindungsgemäßen Natriumpercarbonatpartikel zeigen im Vergleich zu den aus WO 95/02724 bekannten Partikeln mit einem Gewichtsverhältnis von Alkalimetallpercarbonat zu hydrophoben Material im Bereich von 4:1 bis 40:1 bei der Handhabung eine deutlich geringere Staubbildung, da das hydrophobierte feinteilige Oxid bei den erfindungsgemäßen Natriumpercarbonatpartikeln überraschenderweise fest an der Oberfläche der Natriumpercarbonatpartikel haftet und praktisch nicht zu Abrieb und Staubbildung beiträgt. Die erfindungsgemäßen Natriumpercarbonatpartikel können deshalb im Gegensatz zu den aus WO 95/02724 bekannten Partikeln durch pneumatische Förderung transportiert werden, ohne das es zu Staubbildung und vermehrtem Abrieb oder zur Entmischung von Natriumpercarbonat und hydrophobiertem feinteiligen Oxid kommt. Im Gegensatz zu den aus WO 95/02724 bekannten Alkalimetallpercarbonatparikeln zeigen die erfindungsgemäßen Natriumpercarbonatpartikel praktisch keine Nachteile bei der Dispergierbarkeit in Wasser im Vergleich zu Natriumpercarbonatpartikeln, die an der Oberfläche kein hydrophobiertes feinteiliges Oxid enthalten. Die erfindungsgemäßen Natriumpercarbonatpartikel lösen sich ebenso rasch in Wasser wie Natriumpercarbonatpartikel, die kein hydrophobiertes feinteiliges Oxid enthalten und führen beim Auflösen in Wasser in den in Bleich-, Wasch- und Reinigungsmitteln üblichen Verwendungsmengen nicht zu störenden Abscheidungen des hydrophobierten feinteiligen Oxids.

Gegenstand der Erfindung ist weiterhin ein Verfahren zur Herstellung der erfindungsgemäßen Natriumpercarbonatpartikel, bei dem Natriumpercarbonatpartikel, die gegebenenfalls eine oder mehrere Hüllschichten aufweisen, mit 0,01 bis 1 Gew.-% und vorzugsweise 0,1 bis 0,5 Gew.-% eines hydrophobierten feinteiligen Oxids der Elemente Silicium, Aluminium oder Titan oder eines Mischoxids dieser Elemente gemischt werden. Als hydrophobiertes feinteiliges Oxid wird dabei vorzugsweise eine hydrophobierte pyrogene oder gefällte Kieselsäure verwendet.

Die eingesetzten Natriumpercarbonatpartikel weisen vorzugsweise eine mittlere Partikelgröße im Bereich von 0,2 bis 5 mm und besonders bevorzugt im Bereich von 0,5 bis 2 mm auf. Das hydrophobierte feinteilige Oxid weist vorzugsweise eine mittlere Partikelgröße von weniger als 20 µm auf. Das Verhältnis der mittleren Partikelgröße der eingesetzten Natriumpercarbonatpartikel zur mittleren Partikelgröße des verwendeten hydrophobierten feinteiligen Oxids ist vorzugsweise größer als 20 und besonders bevorzugt größer als 50.

Die eingesetzten Natriumpercarbonatpartikel werden vorzugsweise im trockenen Zustand mit dem hydrophobierten feinteiligen Oxid gemischt. Die Mischung kann dabei in allen zur Mischung von Feststoffen geeigneten Apparaten erfolgen. Vorzugsweise werden die Natriumpercarbonatpartikel zum Mischen mit dem hydrophobierten feinteiligen Oxid in einer Gasphase dispergiert. Der Mischvorgang kann bei dieser bevorzugten Ausführungsform des Verfahrens zum Beispiel in einer Wirbelschicht, in einem Fallrohr oder in einem Flugstromförderer erfolgen.

Überraschenderweise wird auch beim trockenen Vermischen der Natriumpercarbonatpartikel mit 0,01 bis 1 Gew.-% des hydrophobierten feinteiligen Oxids das hydrophobierte feinteilige Oxid praktisch vollständig an die Oberfläche der eingesetzten Natriumpercarbonatpartikel gebunden, so dass das eingesetzte feinteilige Oxid praktisch nicht zum Feinkornanteil und zur Staubbildung im erhaltenen Produkt beiträgt.

Das Mischen der eingesetzten Natriumpercarbonatpartikel mit dem hydrophobierten feinteiligen Oxid in einem Fallrohr oder in einem Flugstromförderer ermöglicht in einfacher Weise die kontinuierliche Herstellung der erfindungsgemäßen Natriumpercarbonatpartikel und erfordert keine Mischeinrichtungen mit zusätzlichen bewegten Teilen. Das kontinuierliche Mischen in einem Fallrohr oder einem Flugstromförderer ermöglicht die Herstellung eines besonders homogenen Produkts, in dem im wesentlichen alle Natriumpercarbonatpartikel auf ihrer Oberfläche den erfindungsgemäßen Gewichtsanteil eines hydrophobierten feinteiligen Oxids aufweisen.

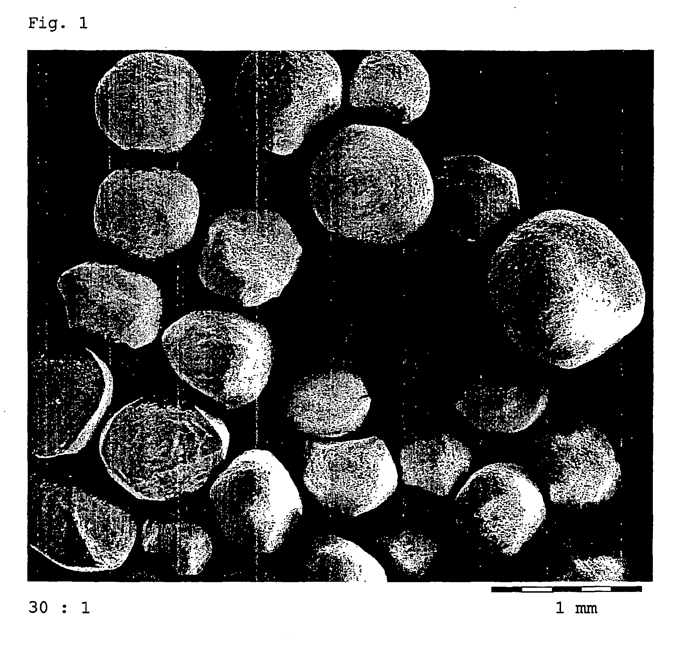

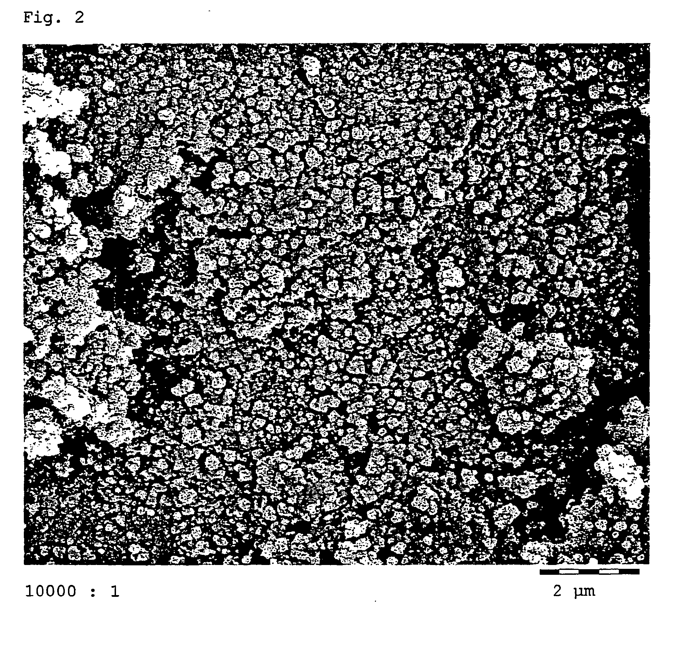

Fig.1 und Fig. 2 zeigen rasterelektronenmikroskopische Aufnahmen von erfindungsgemäßen Natriumpercarbonatpartikeln mit einer Hüllschicht aus 6 Gew.-% Natriumsulfat, die auf der Oberfläche 0,5 Gew.-% der hydrophobierten Kieselsäure Aerosil® R812 enthalten. Die Partikel wurden durch Wirbelschichtsprühgranulation, anschließende Umhüllung durch Aufsprühen von Natriumsulfatlösung in einer Wirbelschicht unter Verdampfung von Wasser und trockenes Mischen der umhüllten Partikel mit der hydrophobierten Kieselsäure in einem Taumelmischer hergestellt. Die Abbildungen zeigen, dass in den erfindungsgemäßen Partikeln die hydrophobierte Kieselsäure praktisch vollständig an der Oberfläche der eingesetzten Natriumpercarbonatpartikel haftet.

Ein weiterer Gegenstand der Erfindung richtet sich auf die Verwendung der erfindungsgemäßen Natriumpercarbonatpartikeln als bleichwirksame Komponente, in Wasch-, Bleich- oder Reinigungsmitteln. Bei den Wasch-, Bleich- oder Reinigungsmitteln handelt es sich insbesondere um solche, welche mindestens einen Builder und vorzugsweise einen silikatischen Builder enthalten. Unter Builder werden dabei alle löslichen oder unlöslichen Verbindungen verstanden, die bei der Verwendung des Wasch-, Bleich- oder Reinigungsmittels in der Lage sind, Calcium- und/oder Magnesiumionen aus dem verwendeten Wasser zu sequestrieren, bzw. zu komplexieren. Beispiele für silikatische Builder sind lösliche Silikate, unlösliche Schichtsilikate und Zeolithe, insbesondere Zeolith A und Zeolith X.

Die erfindungsgemäßen Natriumpercarbonatpartikel werden in Wasch-, Bleich- oder Reinigungsmitteln vorzugsweise in einer Menge von 5 bis 50 Gew.-%, besonders bevorzugt 10 bis 40 Gew.-% und insbesondere 15 bis 20 Gew.-% verwendet. Die Wasch-, Bleich- und Reinigungsmittel können neben dem erfindungsgemäßen Natriumpercarbonatpartikeln weitere Bestandteile enthalten, insbesondere
- ein oder mehrere Tenside, vorzugsweise ausgewählt aus der Reihe der kationischen, anionischen, nicht-ionischen und amphoteren Tenside,
- einen oder mehrere anorganische und/oder organische Builder, vorzugsweise ausgewählt aus der Reihe der Zeolithe, Schichtsilikate, löslichen Silikate, Polyphosphate, Aminopolyessigsäuren, Aminopolyphosphonsäuren sowie Polyoxycarbonsäuren,
- eine oder mehrere alkalisch wirkende Komponenten, vorzugsweise ausgewählt aus der Reihe der Alkalicarbonate, Alkalisilikate und Alkanolamine,
- einen oder mehrere Bleichaktivatoren, vorzugsweise ausgewählt aus der Reihe der N-Acylverbindungen und O-Acylverbindungen, wie zum Beispiel Tetraacetylethylendiamin (TAED) oder Nonanoyloxybenzolsulfonat (NOBS),
- ein oder mehrere Enzyme, vorzugsweise ausgewählt aus der Reihe der Lipasen, Cutinasen, Amylasen, Proteasen, Esterasen, Cellulasen, Pectinasen, Lactasen und Peroxidasen und
- einen oder mehrere Hilfsstoffe, vorzugsweise ausgewählt aus der Reihe der Peroxidstabilisatoren, Antiredepositionsmittel, optischen Aufheller, Schauminhibitoren, Desinfektionsmittel, Korrosionsinhibitoren, Duftstoffe und Farbstoffe.

Durch die Verwendung der erfindungsgemäßen Natriumpercarbonatpartikel als bleichwirksame Komponente, in Wasch-, Bleich- oder Reinigungsmitteln läßt sich die Lagerstabilität dieser Mittel verbessern und der Verlust an Aktivsauerstoff bei der Lagerung der Mittel verringern.

### Beispiele

Das in den Beispielen zur Herstellung der erfindungsgemäßen Natriumpercarbonatpartikel eingesetzte Natriumpercarbonat wurde durch Wirbelschichtaufbaugranulation nach dem in WO 95/06615 beschriebenen Verfahren hergestellt. Die eingesetzten Natriumpercarbonatpartikel wiesen eine mittlere Partikelgröße von 0,65 mm auf und enthielten praktisch keine Partikel mit einem Durchmesser kleiner 0,3 mm. Natriumpercarbonatpartikel mit einer Hüllschicht aus 2 Gew.-% Natriumsulfat wurden daraus in einer Laborapparatur durch Aufsprühen von wässriger Natriumsulfatlösung und gleichzeitiges Verdampfen von Wasser hergestellt. Natriumpercarbonatpartikel mit einer Hüllschicht aus 6 Gew.-% Natriumsulfat wurden durch Aufsprühen einer wässrigen Natriumsulfatlösung nach dem in EP-A 0 670 917 beschriebenen Verfahren hergestellt.

Zur Herstellung der erfindungsgemäßen Natriumpercarbonatpartikel wurde das eingesetzte Natriumpercarbonat in einem Taumelmischer 30 min mit den in Tabellen 1 bis 3 und Tabelle 5 angeführten Mengen und Typen an feinteiliger Kieselsäure gemischt. Die verwendeten feinteiligen Kieselsäuren wiesen folgende Eigenschaften auf:
- Aerosil® R812: pyrogene Kieselsäure, hydrophobiert mit Hexamethyldisilazan, spezifische Oberfläche nach BET 260 m²/g, mittlere Primärpartikelgröße 7 nm, Methanolbenetzbarkeit 50
- Aerosil® R972: pyrogene Kieselsäure, hydrophobiert mit Dimethyldichlorsilan, spezifische Oberfläche nach BET 110 m²/g, mittlere Primärpartikelgröße 16 nm, Methanolbenetzbarkeit 35
- Aerosil® 200: pyrogene Kieselsäure, nicht modifiziert, spezifische Oberfläche nach BET 200 m²/g, mittlere Primärpartikelgröße 12 nm
- Sipernat® D17: gefällte Kieselsäure, hydrophobiert, spezifische Oberfläche nach BET 100 m²/g, mittlere Partikelgröße 7,0 µm, Methanolbenetzbarkeit 55
- Sipernat® 22S: gefällte Kieselsäure, nicht modifiziert, spezifische Oberfläche nach BET 190 m²/g, mittlere Partikelgröße 7,0 µm

Zur Bestimmung der Lagerstabilität in Gegenwart von zeolithischem Builder wurden 15 g des erhaltenen Produkts mit 15 g Zeolith A (Zeocros CG 180) gemischt und für 68 h bei 38°C und 75 % relativer Feuchte offen in einem Klimaschrank gelagert. Vor und nach der Lagerung wurde der Aktivsauerstoffgehalt durch manganometrische Titration bestimmt und daraus der Aktivsauerstoffgehalt bei der Lagerung (rel. Rest-Oa) berechnet. Die Versuchsergebnisse sind in den Tabellen 1 bis 3 zusammengestellt und zeigen, dass die erfindungsgemäßen Natriumpercarbonatpartikel eine deutlich bessere Lagerstabilität in Gegenwart von zeolithischen Buildern aufweisen als Natriumpercarbonatpartikel, die an ihrer Oberfläche kein feinteiliges Oxid oder eine feinteilige hydrophile Kieselsäure, wie Aerosil® 200 oder Sipernat® 22S enthalten.

**Tabelle 1: Lagerstabilität von Natriumpercarbonat ohne Hüllschicht in Gegenwart von Zeolith A**

| Bsp. | Feinteiliges Oxid | Menge an feinteiligem Oxid in Gew.-% | Rel. Rest-Oa in % |
|---|---|---|---|
| 1* | ohne | | 77 |
| 2* | Aerosil R812 | 0,1 | 87 |
| 3 | Aerosil R812 | 0,2 | 89 |
| 4 | Aerosil R812 | 0,3 | 90 |
| 5* | Aerosil 200 | 0,3 | 81 |

| | | | |
|---|---|---|---|
| * nicht erfindungsgemäßes Beispiel | | | |

**Tabelle 2: Lagerstabilität von Natriumpercarbonat mit einer Hüllschicht aus 2 Gew.-% Na₂SO₄ in Gegenwart von Zeolith A**

| Bsp. | Feinteiliges Oxid | Menge an feinteiligem Oxid in Gew.-% | Rel. Rest-Oa in % |
|---|---|---|---|
| 6* | ohne | | 80 |
| 7 | Aerosil R812 | 0,05 | 82 |
| 8 | Aerosil R812 | 0,1 | 89 |
| 9 | Aerosil R812 | 0,2 | 90 |
| 10 | Aerosil R812 | 0,3 | 89 |
| 11 | Aerosil R972 | 0,3 | 90 |
| 12* | Aerosil R200 | 0,3 | 80 |
| 13 | Sipernat D17 | 0,3 | 91 |
| 14* | Sipernat 22S | 0,3 | 82 |

| | | | |
|---|---|---|---|
| * nicht erfindungsgemäßes Beispiel | | | |

**Tabelle 3: Lagerstabilität von Natriumpercarbonat mit einer Hüllschicht aus 6 Gew.-% Na₂SO₄ in Gegenwart von Zeolith A**

| Bsp. | Feinteiliges Oxid | Menge an feinteiligem Oxid in Gew.-% | Rel. Rest-Oa in % |
|---|---|---|---|
| 15* | ohne | | 85 |
| 16 | Aerosil R812 | 0,1 | 90 |
| 17 | Aerosil R812 | 0,3 | 95 |
| 18 | Aerosil R972 | 0,1 | 89 |
| 19* | Aerosil R972 | 2,5 | 91 |

| | | | |
|---|---|---|---|
| * nicht erfindungsgemäßes Beispiel | | | |

In Tabelle 4 sind für einige der hergestellten Natriumpercarbonatpartikel die Aktivsauerstoffgehalte und die Handhabungseigenschaften der Lösezeit und des Abriebs zusammengestellt. Die Aktivsauerstoffgehalte wurden durch manganometrische Titration bestimmt. Die Lösezeit wurde konduktometrisch bestimmt als die Zeit, nach der beim Auflösen von 2,5 g Produkt pro Liter Wasser bei 20°C unter Rühren 90 % des Endwerts der Leitfähigkeit erreicht werden. Der Abrieb wurde nach ISO 5937 bestimmt. Das Produkt aus den Beispielen 6, 10, 16 und 18 zeigte bei der Bestimmung der Lösezeit keine Tendenz zur Verklumpung und lieferte klare Lösungen. Das Produkt aus Beispiel 19 verklumpte bei der Bestimmung der Lösezeit und zeigte auch nach vollständiger Auflösung des Natriumpercarbonats auf der Oberfläche der Lösung eine sichtbare Abscheidung der hydrophoben Kieselsäure.

**Tabelle 4: Aktivsauerstoffgehalt und Handhabungseigenschaften der Natriumpercarbonatpartikel**

| Bsp. | Aktivsauerstoffgehalt in Gew.-% | Lösezeit in min | Abrieb in Gew.-% |
|---|---|---|---|
| 6* | 14,17 | 1,5 | 3,4 |
| 10 | 14,14 | 1,5 | 3,2 |
| 16 | 13,59 | 1,4 | |
| 18 | 13,35 | 1,05 | 1,2 |
| 19* | 13, 36 | 6,1 | 4,2 |

| | | | |
|---|---|---|---|
| * nicht erfindungsgemäßes Beispiel | | | |

Aus den Daten von Tabelle 4 ist ersichtlich, dass sich die erfindungsgemäßen Natriumpercarbonatpartikel (Beispiel 10) von vergleichbaren Natriumpercarbonatpartikeln (Beispiel 6), die an der Oberfläche kein feinteiliges Oxid aufweisen, hinsichtlich der Auflösung in Wasser und der Staubbildung durch Abrieb nicht unterscheiden. Ein nach WO 95/02724 hergestelltes Produkt (Beispiel 19) zeigt dagegen eine deutlich höhere Staubbildung durch Abrieb, sowie eine verlängerte Lösezeit, wobei es beim Auflösen der Partikel zur Verklumpung kommt und auch nach Auflösen des Natriumpercarbonats unerwünschte Abscheidungen der im Produkt enthaltenen Kieselsäure auftreten.

Tabelle 5 zeigt durch Siebanalysen bestimmte Korngrößenverteilungen der Proben aus den Beispielen 6 und 10, wobei sich die Probe aus Beispiel 10 von der Probe aus Beispiel 6 nur durch das Aufbringen von 0,3 Gew.-% Aerosil® R812 unterscheidet. Das Fehlen von Feinkorn im Bereich kleiner 0,3 mm zeigt, dass das aufgebrachte Aerosil® an der Oberfläche der Natriumpercarbonatpartikel haftet.

**Tabelle 5: Siebanalysen der Natriumpercarbonatpartikel**

| Kornfraktion in mm | Anteil der Kornfraktion in Gew.-% | |
|---|---|---|
| | Beispiel 6* | Beispiel 10 |
| Kleiner 0,1 | 0 | 0 |
| 0,1 - 0,2 | 0,1 | 0 |
| 0,2 - 0,3 | 0,1 | 0 |
| 0,3 - 0,4 | 2,3 | 1,8 |
| 0,4 - 0,5 | 24,4 | 16,1 |
| 0,5 - 0,6 | 22,8 | 21,0 |
| 0,6 - 0,7 | 22,9 | 25,7 |
| 0,7 - 0,8 | 11,6 | 14,4 |
| 0,8 - 1,0 | 10,6 | 14,0 |
| 1,0 - 1,25 | 4,5 | 6,0 |
| 1,25 - 1,4 | 0,6 | 0,7 |
| 1,4 - 1,6 | 0,2 | 0,2 |
| Größer 1,6 | 0 | 0,1 |

| | | |
|---|---|---|
| * nicht erfindungsgemäßes Beispiel | | |

Von den Proben der Beispiele 15, 18 und 19 wurde außerdem die Silierbarkeit durch Messung des Zeitverfestigungsverhaltens nach Jenike bestimmt, wie in EP-B 863 842 auf Seite 5, Zeilen 20 bis 38 beschrieben. Der Fließfähigkeitsindex ffc ist ein Maß für die Fließfähigkeit des Materials nach Lagerung unter Druckbelastung, wie sie bei Lagerung in einem Silo erfolgt. Materialien mit einem höheren Fließfähigkeitsindex ffc zeigen eine geringere Zeitverfestigung und weniger Verbackungen und sind auch nach längerer Lagerung in einem Silo noch frei fließfähig. Die in Tabelle 6 zusammengestellten Ergebnisse zeigen, dass die erfindungsgemäßen Natriumpercarbonatpartikel (Beispiel 18) im Vergleich mit Natriumpercarbonatpartikeln (Beispiel 15), die an der Oberfläche kein feinteiliges Oxid aufweisen, weniger Zeitverfestigung und damit eine verbesserte Fließfähigkeit und Silierbarkeit aufweisen, während ein nach WO 95/02724 hergestelltes Produkt (Beispiel 19) eine höhere Zeitverfestigung und damit eine verschlechterte Fließfähigkeit und Silierbarkeit aufweist.

**Tabelle 6: Zeitverfestigungsverhalten der Natriumpercarbonatpartikel**

| Bsp. | Fließfähigkeitsindex ffc nach Jenike | | |
|---|---|---|---|
| | Ohne Lagerung | Nach 1 Tag | Nach 7 Tagen |
| 15* | 77 | 15 | 15 |
| 18 | 61 | 23 | 23 |
| 19* | 19 | 9,3 | 7,7 |

| | | | |
|---|---|---|---|
| * nicht erfindungsgemäße Beispiele | | | |

In Tabelle 7 sind die Ergebnisse von Klimatests zur Bestimmung der Lagerstabilität von Natriumpercarbonat in einem handelsüblichen Vollwaschmittel zusammengestellt. Im Klimatest wird das Natriumpercarbonat mit einem phosphatfreien, zeolithhaltigen Waschmittelpulver und mit Aktivator TAED in einer solchen Menge gemischt, dass das Gemisch 5 Gew.-% TAED enthält und der Aktivsauerstoffgehalt des Gemischs etwa 2,35 Gew.-% beträgt. Das Waschmittelpulver enthält als Bestandteile (in Gew.-%)

| | |
|---|---|
| Anionische Tenside | 12 |
| Nichtionische Tenside | 8 |
| Zeolith A | 36 |
| Soda | 10 |
| Natriumsilikate | 3 |
| Rest (inkl. Feuchte) | 31 |

800 g des Gemischs werden in handelsüblichen, wasserabweisend imprägnierten und verklebten E1-Waschmittelpaketen bei 35 °C und 80 % relativer Feuchte im Klimaschrank gelagert. Jeweils nach 4 bzw. 8 Wochen wird ein Paket entnommen und der Aktivsauerstoffgehalt in üblicher Weise manganometrisch bestimmt. Aus dem bestimmten Oa-Gehalt und dem Ausgangs-Oa-Gehalt wird der relative Rest-Oa nach 4 bzw. 8 Wochen berechnet.

Beispiel 20 wurde mit einem Natriumpercarbonat durchgeführt, das eine Hüllschicht aus 6 Gew.-% Natriumsulfat und eine Partikelgröße von mehr als 0,4 mm aufweist. Beispiel 21 wurde mit erfindungsgemäßen Natriumpercarbonatpartikeln ausgeführt, bei denen, wie oben beschrieben, auf die Natriumpercarbonatpartikel von Beispiel 20 0,5 Gew.-% der hydrophobierten Kieselsäure Aerosil® R812 aufgebracht waren.

**Tabelle 7: Lagerstabilität von Natriumpercarbonat in einem Vollwaschmittel**

| Bsp. | Feinteiliges Oxid | rel. Rest-Oa nach 4 Wochen in % | rel. Rest-Oa nach 8 Wochen in % |
|---|---|---|---|
| 20* | ohne | 95 | 86 |
| 21 | 0,5 Gew.-% Aerosil R812 | 98 | 88 |

| | | | |
|---|---|---|---|
| * nicht erfindungsgemäßes Beispiel | | | |

Die Ergebnisse aus Tabelle 7 zeigen, dass die erfindungsgemäßen Natriumpercarbonatpartikel im Vergleich zu Natriumpercarbonat, dass an der Oberfläche kein feinteiliges, hydrophobiertes Oxid aufweist, bei der Verwendung als Bleichkomponente in einem Waschmittel zu einem verringerten Verlust an Aktivsauerstoffgehalt bei der Lagerung des Waschmittels führen.

## Patentansprüche

1. Natriumpercarbonatpartikel,
**dadurch gekennzeichnet,**
**dass** sie auf ihrer Oberfläche 0,01 bis 1 Gew.-%, vorzugsweise 0,1 bis 0,5 Gew.-%, eines hydrophobierten feinteiligen Oxids der Elemente Si, A1 oder Ti oder eines Mischoxids dieser Elemente enthalten.

2. Natriumpercarbonatpartikel nach Anspruch 1,
**dadurch gekennzeichnet,**
**dass** das hydrophobierte feinteilige Oxid eine hydrophobierte pyrogene oder gefällte Kieselsäure ist.

3. Natriumpercarbonatpartikel nach Anspruch 1 oder 2,
**dadurch gekennzeichnet,**
**dass** das hydrophobierte feinteilige Oxid eine mittlere Partikelgröße von weniger als 20 µm aufweist.

4. Natriumpercarbonatpartikel nach einem der vorhergehenden Ansprüche,
**dadurch gekennzeichnet,**
**dass** die Natriumpercarbonatpartikel eine mittlere Partikelgröße im Bereich von 0,2 bis 5 mm, vorzugsweise im Bereich von 0,5 bis 2 mm, aufweisen.

5. Natriumpercarbonatpartikel nach einem der vorhergehenden Ansprüche,
**dadurch gekennzeichnet,**
**dass** die Natriumpercarbonatpartikel im wesentlichen eine kugelförmige Gestalt mit glatter Oberfläche aufweisen.

6. Natriumpercarbonatpartikel nach einem der vorhergehenden Ansprüche,
**dadurch gekennzeichnet,**
**dass** die Natriumpercarbonatpartikel durch Wirbelschichtsprühgranulation hergestellt wurden.

7. Natriumpercarbonatpartikel nach einem der vorhergehenden Ansprüche,
**dadurch gekennzeichnet,**
**dass** sie auf einem Kern aus Natriumpercarbonat eine Hüllschicht aufweisen, die als Hauptbestandteil ein oder mehrere anorganische, hydratbildende Salze enthält.

8. Natriumpercarbonatpartikel nach Anspruch 7,
**dadurch gekennzeichnet,**
**dass** das bzw. die anorganischen, hydratbildenden Salze ausgewählt werden aus Natriumsulfat, Natriumcarbonat, Natriumhydrogencarbonat oder Magnesiumsulfat, sowie Mischungen oder Mischsalzen dieser Verbindungen und vorzugsweise Natriumsulfat ist.

9. Natriumpercarbonatpartikel nach Anspruch 7 oder 8,
**dadurch gekennzeichnet,**
**dass** der Anteil der Hüllschicht am Natriumpercarbonatpartikel im Bereich von 1 bis 20 Gew.-% und vorzugsweise im Bereich von 2 bis 10 Gew.-% liegt.

10. Natriumpercarbonatpartikel nach einem der Ansprüche 7 bis 9,
**dadurch gekennzeichnet,**
**dass** sie über einer anorganische, hydratbildende Salze enthaltenden Hüllschicht eine zweite Hüllschicht aufweisen, die als Hauptkomponente ein Alkalimetallsilikat mit einem Modul SiO₂ zu M₂O (M = Alkalimetall) von größer 2,5 enthält.

11. Natriumpercarbonatpartikel nach Anspruch 10,
**dadurch gekennzeichnet,**
**dass** die zweite Schicht durch Aufsprühen einer Alkalimetallsilikat enthaltenden wässrigen Lösung mit einer Konzentration im Bereich von 2 bis 20 Gew.-% Alkalimetallsilikat hergestellt wurde.

12. Verfahren zur Herstellung von Natriumpercarbonatpartikeln gemäß einem der Ansprüche 1 bis 11,
**dadurch gekennzeichnet,**
**dass** Natriumpercarbonatpartikel, die gegebenenfalls eine oder mehrere Hüllschichten aufweisen, mit 0,01 bis 1 Gew.-%, vorzugsweise 0,1 bis 0,5 Gew.-%, eines hydrophobierten feinteiligen Oxids der Elemente Si, Al oder Ti oder eines Mischoxids dieser Elemente gemischt werden.

13. Verfahren nach Anspruch 12,
**dadurch gekennzeichnet,**
**dass** die eingesetzten Natriumpercarbonätpartikel in trockenem Zustand mit dem hydrophobierten feinteiligen Oxid gemischt werden.

14. Verfahren nach Anspruch 12 oder 13,
**dadurch gekennzeichnet,**
**dass** die eingesetzten Natriumpercarbonatpartikel eine mittlere Partikelgröße im Bereich von 0,2 bis 5 mm, vorzugsweise im Bereich von 0,5 bis 2 mm, aufweisen und das hydrophobierte feinteilige Oxid eine mittlere Partikelgröße von weniger als 20 µm aufweist.

15. Verfahren nach einem der Ansprüche 12 bis 14,
**dadurch gekennzeichnet,**
**dass** die Natriumpercarbonatpartikel zum Mischen mit dem hydrophobierten feinteiligen Oxid in einer Gasphase dispergiert werden.

16. Verfahren nach Anspruch 15,
**dadurch gekennzeichnet,**
**dass** das hydrophobierte feinteilige Oxid den eingesetzten Natriumpercarbonatpartikeln in einem Fallrohr oder in einem Flugstromförderer zugemischt wird.

17. Verwendung von Natriumpercarbonatpartikeln gemäß einem der Ansprüche 1 bis 11 als Bleichkomponente in einem Bleich-, Wasch- oder Reinigungsmittel.

## Claims

1. Sodium percarbonate particles,
**characterized in that**
they comprise on their surface 0.01 to 1 wt%, preferably 0.1 to 0.5 wt%, of a hydrophobized finely divided oxide of the elements Si, Al or Ti or a mixed oxide of these elements.

2. Sodium percarbonate particles according to Claim 1,
**characterized in that**
said hydrophobized finely divided oxide is a hydrophobized pyrogenic or precipitated silica.

3. Sodium percarbonate particles according to Claim 1 or 2,
**characterized in that**
said hydrophobized finely divided oxide has an average particle size of less than 20 µm.

4. Sodium percarbonate particles according to one of the preceding claims,
**characterized in that**
said sodium percarbonate particles have an average particle size in the range of from 0.2 to 5 mm, preferably in the range of from 0.5 to 2 mm.

5. Sodium percarbonate particles according to one of the preceding claims,
**characterized in that**
said sodium percarbonate particles have an essentially spherical shape with a smooth surface.

6. Sodium percarbonate particles according to one of the preceding claims,
**characterized in that**
said sodium percarbonate particles have been prepared by fluidized bed spray granulation.

7. Sodium percarbonate particles according to one of the preceding claims,
**characterized in that**
each sodium percarbonate particle is surrounded by a coating, said coating comprising one or more hydrate-forming inorganic salts as the main component(s) on a core of sodium percarbonate.

8. Sodium percarbonate particles according to Claim 7,
**characterized in that**
said one or more hydrate-forming inorganic salts are selected from the group consisting of: sodium sulphate, sodium carbonate, sodium hydrogencarbonate or magnesium sulphate, as well as mixtures or mixed salts of these compounds, and is preferably sodium sulphate.

9. Sodium percarbonate particles according to Claim 7 or 8,
**characterized in that**
the proportion of said coating layer in the sodium percarbonate particle is in the range of from 1 to 20 wt% and preferably in the range of from 2 to 10 wt%.

10. Sodium percarbonate particles according to one of Claims 7 to 9,
**characterized in that**
they further comprise a second coating over said coating comprising hydrate-forming inorganic salts, said second coating comprising as its main component an alkali metal silicate with a modulus SiO₂ to M₂O (M = alkali metal) of greater than 2.5.

11. Sodium percarbonate particles according to Claim 10,
**characterized in that**
said second coating is prepared by spraying on an aqueous solution comprising said alkali metal silicate with an alkali metal silicate content in the range of from 2 to 20 wt%.

12. Process for producing sodium percarbonate particles according to one of Claims 1 to 11,
**characterized in that**
sodium percarbonate particles, optionally having one or more coatings, are mixed with 0.01 to 1 wt%, preferably 0.1 to 0.5 wt%, of a hydrophobized finely divided oxide of the elements Si, Al or Ti or a mixed oxide of these elements.

13. Process according to Claim 12,
**characterized in that**
said sodium percarbonate particles are mixed with said hydrophobized finely divided oxide in the dry state.

14. Process according to Claim 12 or 13,
**characterized in that**
said sodium percarbonate particles have an average particle size in the range of from 0.2 to 5 mm, preferably in the range of from 0.5 to 2 mm, and said hydrophobized finely divided oxide has an average particle size of less than 20 µm.

15. Process according to one of Claims 12 to 14,
**characterized in that**
said sodium percarbonate particles are dispersed in a gas phase for mixing with said hydrophobized finely divided oxide.

16. Process according to Claim 15,
**characterized in that**
said hydrophobized finely divided oxide is mixed with said sodium percarbonate particles in a falling tube or in an entrained-bed conveyor.

17. Use of sodium percarbonate particles according to one of Claims 1 to 11 as a bleach component in a bleach composition, detergent composition or cleanser composition.

## Revendications

1. Particules de percarbonate de sodium, **caractérisées en ce qu'**elles comportent sur leur surface de 0,01 à 1 % en poids, de préférence de 0,1 à 0,5 % en poids, d'un oxyde finement divisé, rendu hydrophobe, des éléments Si, Al ou Ti ou d'un oxyde mixte de ces éléments.

2. Particules de percarbonate de sodium selon la revendication 1, **caractérisées en ce que** l'oxyde finement divisé, rendu hydrophobe, est un acide silicique pyrogéné ou précipité rendu hydrophobe.

3. Particules de percarbonate de sodium selon la revendication 1 ou 2, **caractérisées en ce que** l'oxyde finement divisé, rendu hydrophobe, a une taille moyenne de particule de moins de 20 µm.

4. Particules de percarbonate de sodium selon l'une quelconque des revendications précédentes, **caractérisées en ce que** les particules de percarbonate de sodium ont une taille moyenne de particule dans la plage de 0,2 à 5 mm, de préférence dans la plage de 0,5 à 2 mm.

5. Particules de percarbonate de sodium selon l'une quelconque des revendications précédentes, **caractérisées en ce que** les particules de percarbonate de sodium ont essentiellement une forme sphérique à surface lisse.

6. Particules de percarbonate de sodium selon l'une quelconque des revendications précédentes, **caractérisées en ce que** les particules de percarbonate de sodium ont été préparées par granulation en lit fluidisé.

7. Particules de percarbonate de sodium selon l'une quelconque des revendications précédentes, **caractérisées en ce qu'**elles comportent sur un noyau en percarbonate de sodium une couche d'enrobage qui contient comme composant principal un ou plusieurs sels inorganiques formant des hydrates.

8. Particules de percarbonate de sodium selon la revendication 7, **caractérisées en ce que** le ou les sels inorganiques formant des hydrates sont choisis parmi le sulfate de sodium, le carbonate de sodium, l'hydrogénocarbonate de sodium ou le sulfate de magnésium, ainsi que des mélanges ou des sels mixtes de ces composés et de préférence le sulfate de sodium.

9. Particules de percarbonate de sodium selon la revendication 7 ou 8, **caractérisées en ce que** la proportion de la couche d'enrobage est dans la plage allant de 1 à 20 % en poids et de préférence dans la plage allant de 2 à 10 % en poids.

10. Particules de percarbonate de sodium selon l'une quelconque des revendications 7 à 9, **caractérisées en ce qu'**elles comportent sur une couche d'enrobage inorganique, contenant des sels formant des hydrates, une seconde couche d'enrobage qui contient comme composant principal un silicate de métal alcalin ayant un module SiO₂ à M₂O (M = métal alcalin) de plus de 2,5.

11. Particules de percarbonate de sodium selon la revendication 10, **caractérisées en ce que** la seconde couche a été produite par pulvérisation d'une solution aqueuse contenant un silicate de métal alcalin, à une concentration dans la plage allant de 2 à 20 % en poids de silicate de métal alcalin.

12. Procédé pour la préparation de particules de percarbonate de sodium selon l'une quelconque des revendications 1 à 11, **caractérisé en ce qu'**on mélange des particules de percarbonate de sodium, qui comportent éventuellement une ou plusieurs couches d'enrobage, avec 0,01 à 1 % en poids, de préférence 0,1 à 0,5 % en poids, d'un oxyde finement divisé, rendu hydrophobe, des éléments Si, Al ou Ti ou d'un oxyde mixte de ces éléments.

13. Procédé selon la revendication 12, **caractérisé en ce que** les particules de percarbonate de sodium utilisées son mélangées à l'état sec avec l'oxyde finement divisé, rendu hydrophobe.

14. Procédé selon la revendication 12 ou 13, **caractérisé en ce que** les particules de percarbonate de sodium utilisées ont une taille moyenne de particule dans la plage de 0,2 à 5 mm, de préférence dans la plage de 0,5 à 2 mm, et l'oxyde rendu hydrophobe, finement divisé, a une raille moyenne de particule de moins de 20 µm.

15. Procédé selon l'une quelconque des revendications 12 à 14, **caractérisé en ce que** les particules de percarbonate de sodium sont dispersées dans une phase gazeuse, pour le mélange avec l'oxyde rendu hydrophobe, finement divisé.

16. Procédé selon la revendication 15, **caractérisé en ce que** l'oxyde rendu hydrophobe, finement divisé, est ajouté aux particules de percarbonate de sodium utilisées, dans un tube de chute ou dans un transporteur pneumatique.

17. utilisation des particules de percarbonate de sodium selon l'une quelconque des revendications 1 à 11, en tant que composant de blanchiment dans un produit de blanchiment, de lavage ou de nettoyage.
